# EUROPEAN PATENT APPLICATION

(11) **EP 1 958 830 A2**
(43) Date of publication of application: **20.08.2008**
(21) Application number: 08002342.7
(22) Date of filing: 08.02.2008
(51) Int. Cl.: B60R 22/26

(54) **Seat for heavy construction equipment**

(30) Priority: 16.02.2007 KR 20070016430
(71) Applicant: Volvo Construction Equipment Holding Sweden AB, 631 85 Eskilstuna (SE)
(72) Inventor: Kim, Hak Shin, Masan (KR)
(74) Representative: Dr. Weitzel & Partner

(57) **Abstract**

A seat for heavy construction equipment is provided, which requires no change of a shape of outer side surfaces of console boxes for heavy equipment in the case where a retractable type seat belt is mounted on a side surface of a seat part having the console boxes mounted on left and right sides thereof, and which can prevent mutual interference between a main body part of the seat belt and the console box when the seat belt is unfastened. The seat for heavy construction equipment having a console box mounted on at least either of left and right sides thereof includes a seat part 11 having a cut part 15 formed on one rear side thereof that is opposite to the console box 10, a buckle receptor 13 mounted on the other rear side of the seat part 11 that is opposite to the cut part 15, and a main body part 17, mounted on the cut part 15, for accommodating a retractable type seat belt that is unlocked from the buckle receptor 13 and is wound into the main body part when the seat belt is unfastened.

## Description

### CROSS-REFERENCE TO RELATED APPLICATION

This application is based on and claims priority from Korean Patent Application No. 10-2007-0016430, filed on February 16, 2007 in the Korean Intellectual Property Office, the disclosure of which is incorporated herein in its entirety by reference.

### BACKGROUND OF THE INVENTION

### Field of the invention

The present invention relates to a seat for heavy construction equipment having a retractable type seat belt mounted on a seat part of a cab as a safety belt used to protect an operator from various kinds of safety accidents.

More particularly, the present invention relates to a seat for heavy construction equipment, which requires no change of a shape of outer side surfaces of console boxes for heavy equipment in the case where a retractable type seat belt is mounted on a side surface of a seat part having the console boxes mounted on left and right sides thereof, and which can prevent mutual interference between a main body part of the seat belt and the console box when the seat belt is unfastened.

### Description of the Prior Art

A seat belt installed on a cab of heavy equipment is used to minimize a secondary injury occurring due to a shock power generated when a safety accident occurs by fixing an operator to a seat

The seat belt as described above includes a strap lap type safety seat belt which is composed of a buckle receptor mounted on one side of a seat part, and a belt mounted on the other side of the seat part and provided with a belt buckle locked in or unlocked from the buckle receptor, and which is in a loose state even after the seat belt is worn; and a retractable type safety seat belt which is composed of a buckle receptor mounted on one side of a seat part, a belt having a belt buckle mounted at an end part of the belt to be locked in or unlocked from the buckle receptor, and a main body part mounted on the other side of the seat part to accommodate the belt being wound, and which makes the belt kept in a tensioned state while the seat belt is worn.

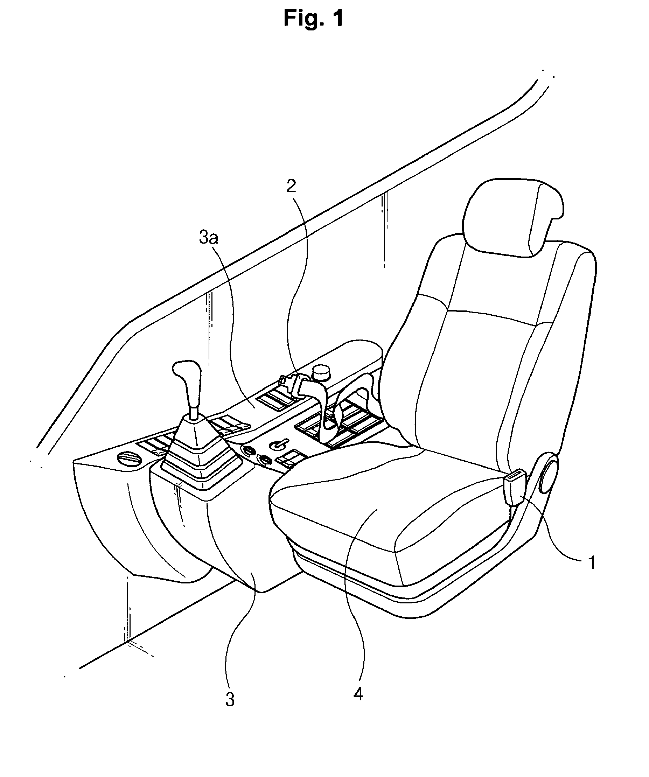

FIG. 1 is a view illustrating a belt buckle of a conventional strap lap type seat belt, which is mounted on a seat for heavy equipment, in a used state.

As illustrated in FIG. 1, in the case where an operator unfastens a seat belt to move out of a cab or to freely move within the cab, a belt buckle 2, which is unlocked from a buckle receptor 1, may be put on an upper surface of a console box 3 or a panel of a switch box 3a due to the careless operator.

In this case, the belt buckle 2 may press a corresponding switch of the console box 3 or the panel of the switch box 3a to cause a misoperation of the equipment contrary to the operator's intention, and thus an unexpected safety accident may occur.

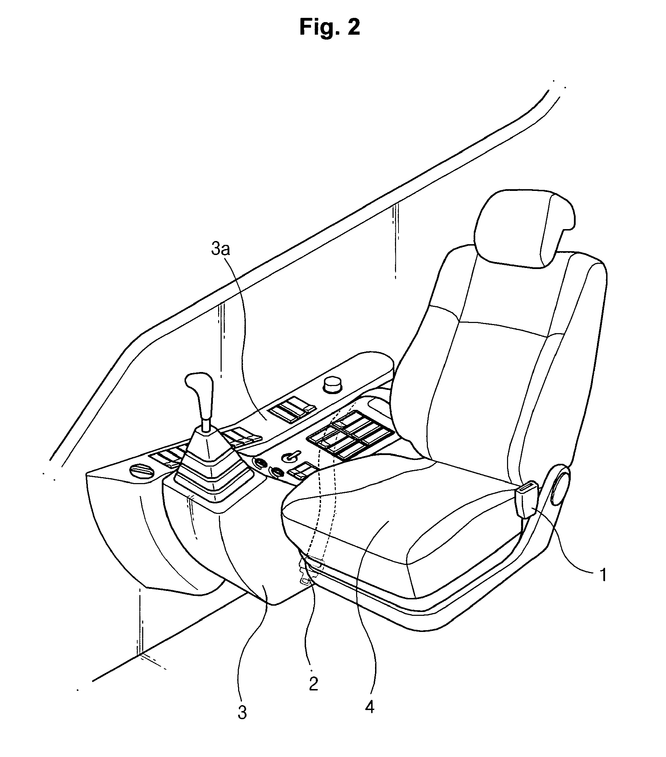

As illustrated in FIG. 2, the belt buckle 2 that is unlocked from the buckle receptor 1 may fall down to a bottom surface of the cab through a narrow space between the console box 3 and the switch box 3a due to a careless operator. In this case, the user should take out the belt through the narrow space to wear the seat belt, and this causes the user inconvenience.

Although not illustrated in the drawing, in the case of mounting the retractable type seat belt on the seat part, taking account of the problems occurring during the use of the strap lap type seat belt, the console box is mounted adjacent to the side surface of the seat part, and thus it is difficult to secure a space sufficient to accommodate the main body part of the seat belt

That is, interference occurs between the main body part of the seat belt mounted to project from an outer side surface of the seat part and the outer side surface of the console box. Accordingly, it is required to change the shape of the outer side surface of the console box so that a space for accommodating the main body part is secured.

In this case, it is required to remove some switches provided on a panel of the console box, and thus inherent functions related to the corresponding switches cannot be performed to lower the working efficiency and competitiveness of the heavy equipment.

In the case of mounting the retractable type seat belt on the outer side surface of the console box, mutual interference occurs between a driving member for moving (e.g., sliding or tilting) the console box relative to the seat part and the main body part of the seat belt, in accordance with various optional works, and thus the operator is ready to suffer inconvenience.

### SUMMARY OF THE INVENTION

Accordingly, the present invention has been made to solve the above-mentioned problems occurring in the prior art while advantages achieved by the prior art are maintained intact.

One object of the present invention is to provide a seat for heavy construction equipment, which requires no change of a shape of outer side surfaces of console boxes for securing a space for accommodating a main body part of a retractable type seat belt for heavy equipment in the case where the seat belt is mounted on a seat part having the console boxes mounted on left and right sides thereof, and thus which requires no change of switches of console box panels to maintain the inherent functions of the corresponding switches.

Another object of the present invention is to provide a seat for heavy construction equipment, which can prevent mutual interference occurring between a driving member for moving a console box relative to a seat part and a main body part of a seat belt, and thus can provide convenience to an operator.

In order to accomplish these objects, there is provided a seat for heavy construction equipment having a console box mounted on at least either of left and right sides thereof, according to the present invention, which includes a seat part 11 having a cut part 15 formed on one rear side thereof that is opposite to the console box 10; a buckle receptor 13 mounted on the other rear side of the seat part 11 that is opposite to the cut part 15; and a main body part 17, mounted on the cut part 15, for accommodating a retractable type seat belt that is unlocked from the buckle receptor 13 and is wound into the main body part when the seat belt is unfastened.

The cut part 15 may be formed at a rear corner of the seat part 11 so that hips of an operator sitting on the seat part 11 are not in contact with the main body part 17.

### BRIEF DESCRIPTION OF THE DRAWINGS

The above and other objects, features and advantages of the present invention will be more apparent from the following detailed description taken in conjunction with the accompanying drawings, in which:
FIG. 1 is an exemplary view showing a belt buckle of a conventional strap lap type seat belt that is separated from a buckle receptor and is put on a switch panel;
FIG. 2 is an exemplary view showing a belt buckle of a conventional strap lap type seat belt that is separated from a buckle receptor and is put between a console box and a switch box;
FIG. 3 is a perspective view illustrating a seat for heavy construction equipment on which a cut part for accommodating a main body part of a seat belt is formed according to an embodiment of the present invention; and
FIG. 4 is an exemplary view showing a seat for heavy equipment on which a retractable seat belt is mounted according to an embodiment of the present invention.

### DETAILED DESCRIPTION OF THE PREFERRED EMBODIMENTS

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

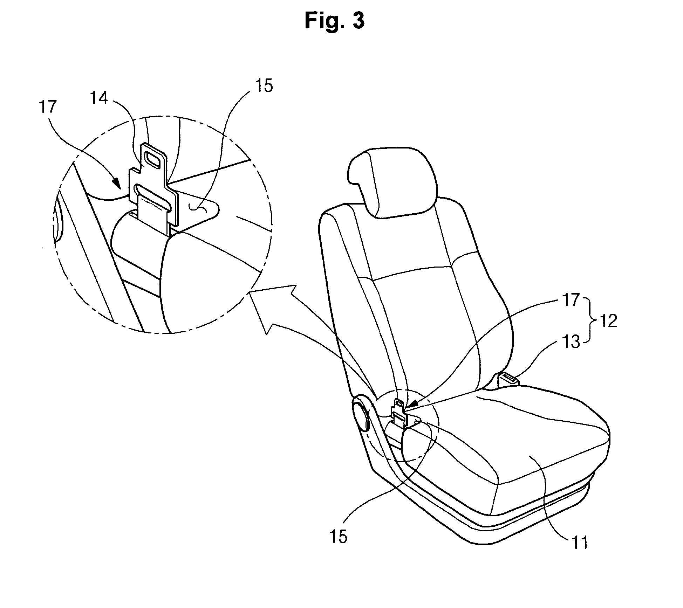

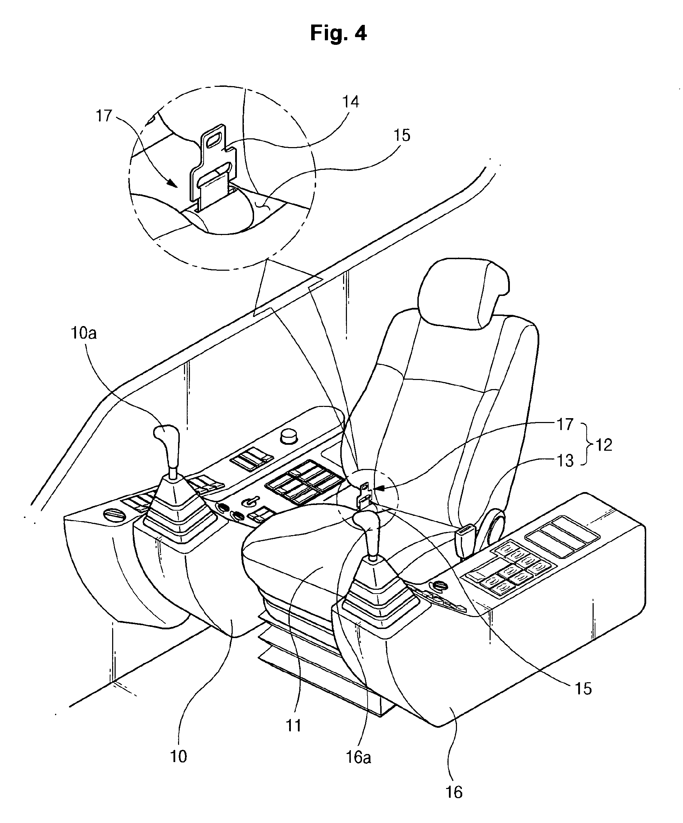

As shown in FIGS. 3 and 4, a seat for heavy construction equipment according to an embodiment of the present invention is composed of a seat part 11 and a seat back part 11 a, and a console box is mounted on at least either of left and right sides of the seat.

The seat for heavy construction equipment according to an embodiment of the present invention includes the seat part 11 having a cut part 15 formed on one rear side thereof that is opposite to the console box 10, a buckle receptor 13 mounted on the other rear side of the seat part 11 that is opposite to the cut part 15, and a main body part 17, mounted on the cut part 15, for accommodating a retractable type seat belt 12 that is unlocked from the buckle receptor 13 and is wound into the main body part when the seat belt is unfastened.

The cut part 15 may be formed at a rear corner of the seat part 11 so that hips of an operator sitting on the seat part 11 are not in contact with the main body part 17.

The retractable type seat belt 12 includes the main body part 17 mounted on the cut part 15, the belt accommodated and wound into the main body part 17, and having a belt buckle 14 mounted on one end part thereof, and the buckle receptor 13 for locking or unlocking the belt buckle 14.

In this case, the console boxes 10 and 16, mounted on left and right sides of the seat part 11, for controlling the operation of working devices such as a boom and so on in accordance with a control signal that corresponds to the amount of manipulation of manipulation levers (RCV levers) 10a and 16a, and a driving member for moving the console boxes 10 and 16 relative to the seat part 11 so as to keep the optimum operation posture in accordance with the operator's main body shape, are already known in the technical field to which the present invention pertains, and thus the detailed description thereof will be omitted.

Hereinafter, the operation of the seat for heavy construction equipment according to an embodiment of the present invention will be described in detail with reference to the accompanying drawings.

As shown in FIGS. 3 and 4, in the case where an operator unfastens a retractable type seat belt 12 to move out of a cab or to have a rest within the cab without moving out of the cab, a belt buckle 14 is unlocked from a buckle receptor 13 mounted on one side surface of a seat part 11, and the seat belt is wound into a main body part 17 through the driving of a winding means (not illustrated).

In this case, since the main body part 17, into which the belt having the belt buckle 14 mounted at one end part thereof is wound, is mounted in the cut part 15, the main body part 17 is not projected from the outer side surface of the seat part 11. Accordingly, in the case of unfastening the seat belt 12, no interference occurs between the main body part 17 and the console box 10.

Accordingly, since it is not required to change the shape of the outer side surface of the console box 10 due to the mounting of the retractable type seat belt 12 (e.g., a groove for accommodating the main body part 17 is formed on the outer side surface of the console box 10), it is not required to remove any of the switches provided on the panel of the console box 10. Accordingly, the inherent functions of the corresponding switches provided on the console box 10 can be maintained to improve the working efficiency of the heavy equipment

Since no mutual interference occurs between the main body part 17 accommodated in a space of the cut part 15 and the console box 10, the console box 10 can be mounted adjacent to the seat part 11. Accordingly, in the case where various kinds of optional works are required to be performed, the operator can easily manipulate the corresponding switches of the console box 10 that is mounted adjacent to the operator, and thus the operation efficiency can be improved.

In addition, since the main body part 17 of the seat belt 12 is accommodated in the cut part 15 of the seat part 11, no interference occurs between the driving member (not illustrated) for moving the console box 10 relative to the seat part 11 and the main body part 17. Accordingly, the operator can easily manipulate the driving member that tilts a front part of the console box 10 toward the rear part of the cab.

As described above, according to the present invention, since it is not required to change the shape of the outer side surfaces of the console boxes for securing a space for accommodating the main body part of the retractable type seat belt in the case where the seat belt is mounted on the side surface of the seat part having the console boxes mounted to face the seat part, it is not required to remove any switches of the console box panels, and thus the inherent functions of the corresponding switches are maintained with the working efficiency and competitiveness of the heavy equipment improved.

In addition, mutual interference occurring between the driving member for moving the console box relative to the seat part and the main body part of the seat belt can be prevented, and thus it is possible to provide convenience to the operator.

Although preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. A seat for heavy construction equipment having a console box mounted on at least either of left and right sides thereof, the seat comprising:
a seat part having a cut part formed on one rear side thereof that is opposite to the console box;
a buckle receptor mounted on the other rear side of the seat part that is opposite to the cut part; and
a main body part, mounted on the cut part, for accommodating a retractable type seat belt that is unlocked from the buckle receptor and is wound into the main body part when the seat belt is unfastened.

2. The seat for heavy construction equipment of claim 1, wherein the cut part is formed at a rear corner of the seat part so that hips of an operator sitting on the seat part are not in contact with the main body part
